(19) Europäisches Patentamt
European Patent Office
Office européen des brevets

(11) **EP 3 349 178 A1**

(12) **EUROPÄISCHE PATENTANMELDUNG**

(43) Veröffentlichungstag:
**18.07.2018   Patentblatt 2018/29**

(51) Int Cl.:
***G06T 11/00*** *(2006.01)*

(21) Anmeldenummer: **17151715.4**

(22) Anmeldetag: **17.01.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Zechner, Stefan**
**1070 Vienna (AT)**

(72) Erfinder: **Die Erfindernennung liegt noch nicht vor**

(74) Vertreter: **Beer & Partner Patentanwälte KG**
**Lindengasse 8**
**1070 Wien (AT)**

(54) **VERFAHREN UND VORRICHTUNG ZUR VERÄNDERUNG DER AFFEKTIVEN VISUELLEN INFORMATION IM GESICHTSFELD EINES BENUTZERS**

(57)     Verfahren und Vorrichtung zur Veränderung der affektiven visuellen Information im Gesichtsfeld eines Benutzers der Vorrichtung mit zumindest einem Bildsensor (14) und zumindest einer Anzeige (2), umfassend die Schritte:
Erfassen eines Bilds eines Sichtfelds der Vorrichtung mit dem Bildsensor (14),
Durchführen einer Gesichtserkennung mit dem erfassten Bild zur Erkennung zumindest eines Gesichts,
Ermitteln der Positionen von Augen und Mund des erkannten Gesichts,
Berechnen eines Überlagerungsbereichs in der Anzeige (2) der Vorrichtung in Abhängigkeit von den ermittelten Positionen von Augen und Mund,
Überlagern des Gesichtsfelds eines Benutzers der Vorrichtung in dem berechneten Überlagerungsbereich der Anzeige (2) mit alternativen Bilddaten.

Fig. 4

**Beschreibung**

Die Erfindung betrifft ein Verfahren und eine Vorrichtung zur Veränderung der affektiven visuellen Information im Gesichtsfeld, insbesondere im Blickfeld, eines Benutzers. Die Vorrichtung weist zumindest einen Bildsensor und zumindest eine Anzeige sowie eine Verarbeitungseinheit auf, die mit dem Bildsensor und der Anzeige verbunden ist, wobei der Bildsensor zur Erfassung eines Bilds eines Sichtfelds der Vorrichtung eingerichtet ist, wobei die Anzeige zum Überlagern des Gesichtsfelds eines Benutzers in einem Überlagerungsbereich der Anzeige mit alternativen Bilddaten eingerichtet ist.

Als Gesichtsfeld des Benutzers wird hier jener Raumwinkel bzw. Bereich des Außenraums bezeichnet, aus dem zumindest ein Auge des Benutzers Lichtimpulse aufnehmen und auswerten kann. Es setzt sich aus den monokularen Gesichtsfeldern der beiden Augen zusammen. Im Vergleich dazu wird als Blickfeld hier jener Bereich bezeichnet, der alle bei ruhiger Kopf- und Körperhaltung mit den Augen nacheinander zentral fixierbaren Sehobjekte im Außenraum enthält; dieser Bereich wird genauer auch als monokulares Blickfeld bezeichnet. Das Sichtfeld bezeichnet schließlich den Bereich im Bildwinkel eines optischen Instruments oder einer optischen Vorrichtung, d.h. den durch die Vorrichtung sichtbaren (mit einem Auge) oder abbildbaren (z.B. mit einem Bildsensor) Bereich des Außenraums.

Es sind Vorrichtungen und Verfahren bekannt, mit denen eine Einblendung von zusätzlicher, d.h. über die Wiedergabe der Umgebung hinausgehender, Information im Gesichtsfeld eines Benutzers möglich ist. Solche Vorrichtungen und Verfahren werden unter dem Begriff "Augmented Reality" (AR) zusammengefasst. Beispielsweise zeigt die US 2011/0214082 A1 eine solche Vorrichtung in der Art einer am Kopf getragenen (Head-Mounted) Sichtvorrichtung mit Durchsicht-Displays, die kurz als "AR-Brille" bezeichnet werden kann. Diese Vorrichtung umfasst eine Kamera zur Erfassung von Bildern der Umgebung, insbesondere eines Sichtfelds der Vorrichtung. Diese Bilder können verarbeitet und die Ergebnisse der Verarbeitung zur Auswahl der eingeblendeten Information verwendet werden. Derartige AR-Vorrichtungen verfolgen generell das Ziel, den Benutzer mit Information zu versorgen, die über die in der Umgebung unmittelbar optisch wahrnehmbare Information hinaus geht ("to augment" bedeutet erweitern, anreichern) und sich davon unterscheidet.

In einem anderen technischen Zusammenhang, bei Videokonferenzsystemen, ist es bekannt, durch Überblendungen bestimmter Bildbereiche die vom Benutzer unmittelbar optisch wahrnehmbare Information zu verändern. Die US 9,060,095 B2 beschreibt ein Verfahren, bei dem das Gesicht eines Teilnehmers an einer Videokonferenz durch ein Ersatzbild, z.B. ein schematisches Gesicht oder ein fremdes Gesicht, ersetzt wird. Damit wird das Ziel verfolgt, die Identität des Teilnehmers vor den anderen Teilnehmern der Videokonferenz zu verbergen. Das überblendete Gesicht des betreffenden Teilnehmers ist für die anderen Teilnehmern nicht sichtbar oder erkennbar. Ein solcher Schutz der Identität ist naturgemäß nicht auf AR-Anwendungen übertragbar, weil ein Träger einer AR-Vorrichtung wie oben beschrieben diese abnehmen kann, um das tatsächliche Gesicht seines Gegenüber zu sehen. Dementsprechend würde es dem Zweck des Verfahrens zuwider laufen, es für Personen in der Umgebung eines Trägers einer AR-Vorrichtung verwenden zu wollen.

Es ist eine Aufgabe der Erfindung, ein Verfahren und eine Vorrichtung vorzuschlagen, mit denen eine Anpassung der affektiven Perzeption eines Benutzers beim Betrachten seiner Umgebung erzielbar ist.

Das erfindungsgemäße Verfahren zur Veränderung der affektiven visuellen Information im Gesichtsfeld, insbesondere im Blickfeld, eines Benutzers einer Vorrichtung mit zumindest einem Bildsensor und zumindest einer Anzeige umfasst die Schritte: Erfassen eines Bilds eines Sichtfelds der Vorrichtung mit dem Bildsensor, Durchführen einer Gesichtserkennung mit dem erfassten Bild zur Erkennung zumindest eines Gesichts, Ermitteln der Positionen von Augen und Mund des erkannten Gesichts, Berechnen eines Überlagerungsbereichs in der Anzeige der Vorrichtung in Abhängigkeit von den ermittelten Positionen von Augen und Mund, und Überlagern des Gesichtsfelds eines Benutzers der Vorrichtung in dem berechneten Überlagerungsbereich der Anzeige mit alternativen Bilddaten. Das Sichtfeld der Vorrichtung ist in der Regel ein Ausschnitt aus dem Gesichtsfeld des Benutzers. Es entspricht nicht notwendiger Weise dem vom Bildsensor abgebildeten Bereich, insbesondere kann der abgebildete Bereich das Sichtfeld der Vorrichtung umfassen und über dieses hinaus gehen. Der Bildsensor kann z.B. Teil einer Blickfeldkamera sein, die ein größeres Sichtfeld als die Vorrichtung selbst hat. Die Vorrichtung kann z.B. eine Brille, eine Kamera, ein Fernglas, ein Visier, oder eine andere optische Vorrichtung sein. Der Bildsensor und die Anzeige sind Teil derselben Vorrichtung und haben vorzugsweise eine feste relative Anordnung. Bei der Gesichtserkennung werden die Anzahl und die Positionen von Gesichtern in dem mit dem Bildsensor erfassten Bild erkannt. Eine solche Gesichtserkennung kann mit herkömmlichen Mitteln und Algorithmen erfolgen. Beim Berechnen des Überlagerungsbereichs werden im Wesentlichen die Position und Abmessungen des Überlagerungsbereichs in der Anzeige berechnet. Das Überlagern des Gesichtsfelds oder Blickfelds des Benutzers wird insbesondere durch Einblenden in ein Sichtfeld der Vorrichtung mit der Anzeige erzielt.

Die erfindungsgemäße Vorrichtung der eingangs angeführten Art zur Veränderung der affektiven visuellen Information im Gesichtsfeld, insbesondere im Blickfeld, eines Benutzers, ist dadurch gekennzeichnet, dass die Verarbeitungseinheit eingerichtet ist, eine Gesichtserkennung mit einem vom Bildsensor erfassten Bild durchzuführen, Positionen von Augen und Mund eines bei der Gesichtserkennung erkannten Gesichts zu ermitteln und einen Überlagerungsbereich in der Anzeige für das Überlagern des Gesichtsfelds in Abhängigkeit von den ermittelten Positionen von Augen und Mund zu berechnen.

Durch das Überlagern des Gesichtsfelds des Benutzers in einem Überlagerungsbereich, welcher von den Positionen von Augen und Mund erkannter Gesichter abhängt, kann eine spezifische Überlagerung dieser Gesichter erzielt werden, welche für eine Regulation der visuellen Wahrnehmung von Affekten an Personen im Gesichtsfeld bzw. Blickfeld des Benutzers verwendet werden kann.

Es hat sich herausgestellt, dass eine solche Regulation der visuellen Wahrnehmung von Affekten einen signifikanten Einfluss auf die Empathiefähigkeit der so unterstützten Personen hat. Beispielsweise konnte bei Personen mit AD(H)S ein positiver Einfluss einer solchen Regulation auf das Selbstvertrauen und eine auf eine gute Selbstwirksamkeit festgestellt werden. Außerdem können Stressreaktionen in der sozialen Interaktion kontrolliert und gedämpft werden.

Als affektive Information werden in diesem Zusammenhang sämtliche Signale bezeichnet, welche eine Emotion eines Individuums ausdrücken. Abhängig von der psychischen Verfassung des Individuums umfassen diese Informationen graduelle Ausdrücke tatsächlicher Emotionen und Ausdrücke zur Überdeckung der tatsächlichen Emotionen ("affektive Fassade") bzw. bei Fehlen spezifischer Emotionen Ausdrücke kognitiv erzeugter, als erwartet oder nützlich eingeschätzter Emotionen. Ebenso wie die Ausdrucksstärke ist auch die Perzeptionsstärke für affektive Informationen individuell verschieden und abhängig von der psychischen Verfassung sowie auch genetisch veranlagt.

Das Überlagern des Gesichtsfelds umfasst vorzugsweise ein Darstellen der alternativen Bilddaten im Überlagerungsbereich der Anzeige.

Dementsprechend kann die Anzeige ein Bildschirm oder ein Display, insbesondere ein transparentes Display, sein.

Vorzugsweise weist die Vorrichtung zwei voneinander in einem festen Abstand angeordnete Bildsensoren auf. Dadurch wird die Bestimmung des Abstands zu einem erkannten Gesicht ermöglicht, wodurch eine genauere Berechnung der Abmessungen des Überlagerungsbereichs in der Anzeige ermöglicht wird.

Besonders bevorzugt umfasst die Vorrichtung eine Augmented Reality Brille. Geeignete Brillen werden beispielsweise von Osterhout Design Group, 153 Townsend Street, Suite 570 San Francisco, CA 94107 angeboten, insbesondere deren Produkte "R-6" oder "R-7 Smartglasses System".

Der Überlagerungsbereich kann im Wesentlichen einem zwischen den Positionen der beiden Augen und des Munds aufgespannten Dreieck entsprechen. D.h. das Berechnen des Überlagerungsbereichs umfasst ein Verbinden der Positionen und Ermitteln der in dem (oder den) eingeschlossenen Dreieck(en) angeordneten Bildpunkte der Anzeige. Es hat sich herausgestellt, dass im Bereich des Auge-Auge-Mund Dreiecks die größte affektive Datenmenge transportiert wird, insbesondere durch die mimische Muskulatur. Ein vergleichsweise geringerer Teil der affektiven Information wird in der üblichen zwischenmenschlichen Interaktion durch die Stimmlage und die Körperhaltung vermittelt. Ein Überlagern der Informationen in diesem Bereich des Gesichtsfelds hat daher eine Verringerung der vom Benutzer wahrgenommenen affektiven Information zur Folge, was zur Regulation genutzt werden kann. Somit kann die von Benutzern mit ungewöhnlich starker affektiver Perzeption wahrgenommenen affektiven Information auf ein Niveau gesenkt werden, welches einer durchschnittlichen affektiven Perzeption entspricht.

Andererseits kann der Überlagerungsbereich auch im Wesentlichen das gesamte Blickfeld außerhalb eines zwischen den Positionen der beiden Augen und des Munds aufgespannten Dreiecks umfassen. D.h. in diesem Fall umfasst das Berechnen des Überlagerungsbereichs ein Verbinden der Positionen und Ermitteln der außerhalb des oder der eingeschlossenen Dreiecks bzw. Dreiecke angeordneten Bildpunkte der Anzeige. Ein Überlagern des Bereichs außerhalb der so genannten Auge-Auge-Mund Dreiecke ermöglicht ein Hervorheben der Auge-Auge-Mund Dreiecke und ein Lenken der Aufmerksamkeit auf diese Dreiecke, z.B. durch Abblenden des übrigen, überlagerten Bereichs. Die Überlagerung hat dann eine Verstärkung der vom Benutzer wahrgenommenen affektiven Information zur Folge. Somit kann die von Benutzern mit ungewöhnlich schwacher affektiver Perzeption wahrgenommenen affektiven Informationen auf ein Niveau gehoben werden, welches einer durchschnittlichen affektiven Perzeption entspricht.

Die Verarbeitungseinheit der gegenständlichen Vorrichtung kann vorzugsweise eine Gesichtserkennungssoftware aufweisen. Mittels der Gesichtserkennungssoftware können einerseits Gesichter in den erfassten Bilddaten erkannt und die Positionen von Augen und Mund der einzelnen erkannten Gesichter bestimmt werden.

Die alternativen Bilddaten können vorzugsweise einer veränderten Abbildung des Sichtfelds der Vorrichtung im Überlagerungsbereich entsprechen, wobei die Veränderung der Abbildung eine Veränderung der Helligkeit, eine Verringerung einer Bildauflösung, eine Veränderung der Zeichnung (auch als Schärfe bezeichnet) und/oder des Kontrastes, eine farbliche Markierung (z.B. mittels eines Rahmens und/oder einer farblichen Tönung) und/oder eine Manipulation der Gesichtszüge umfasst. Die genannten Veränderungen der Abbildung erhalten einen Teil der ursprünglichen Information im Überlagerungsbereich. D.h. es werden nicht alle optischen Informationen im Überlagerungsbereich ersetzt. Dadurch ist die Überlagerung weniger auffällig für den Benutzer, sodass dessen Aufmerksamkeit nicht ungewollt auf den Überlagerungsbereich gelenkt wird. Eine solche für die Umgebung unwillkürlich erscheinende Ablenkung könnte unnatürlich und irritierend auf ein Gegenüber des Benutzers wirken, was mit den vorgeschlagenen Veränderungen vermeidbar ist.

Weiters ist es günstig, im Rahmen des vorliegenden Verfahrens ein Erfassen des Signals zumindest eines Biofeedback-Sensors vorzusehen, wobei die Überlagerung in Abhängigkeit von dem Signal des Biofeedback-Sensors aktiviert wird. Vorzugsweise kann eine Überlagerung nur bei einem vom Biofeedback-Sensor ermittelten Stress-Level oberhalb einer vordefinierten Schwelle aktiviert werden, sodass unterhalb der Schwelle eine unveränderte Wahrnehmung der Umgebung möglich ist. Die Überlagerung wird dabei vorzugsweise nur für eine festgelegte kurze Zeitspanne aktiviert, nach deren Ablauf wieder das unveränderte Sichtfeld wahrnehmbar ist. Als Biofeedback-Sensor kann insbesondere ein Stress-Sensor, z.B. ein Photoplethysmogram (PPG) oder ein Sensor zur Messung des Hautwiderstands, der Hauttemperatur, der Herzfrequenz und/oder der Bewegung des Körpers verwendet werden. Ein derartiger Biofeedback-Sensor ist beispielsweise das Produkt "Q Sensor" der Firma Affectiva, 465 Waverley Oaks Road, Suite 320, Waltham, MA 02452, United States oder die Produkte "Embrace" und "E4" der Firma Empatica Inc, 1 Broadway, 14th Floor, Cambridge, MA 02142, United States.

Dementsprechend kann die gegenständliche Vorrichtung einen Biofeedback-Sensor umfassen, wobei die Verarbeitungseinheit mit dem Biofeedback-Sensor verbunden und eingerichtet ist, die Überlagerung in Abhängigkeit von einem Signal des Biofeedback-Sensors zu aktivieren.

Im Zusammenhang mit der Auswertung des Signals eines Biofeedback-Sensors ist es besonders vorteilhaft, wenn ein Ausmaß der Veränderung der Abbildung in Abhängigkeit von dem Signal des Stress-Sensors ermittelt wird. Beispielsweise kann auf diese Weise mit zunehmenden Stress-Level eine stärkere Abblendung der affektiven Information vorgenommen werden und umgekehrt. Dadurch kann ein negativer Kreislauf, bei dem die Wahrnehmung des Gegenübers von erhöhtem Stress beim Benutzer zu einer affektiven Information beiträgt, die den Stress weiter erhöht, frühzeitig durchbrochen werden. Zugleich kann die Veränderung der Abbildung auf jene Situationen beschränkt werden, in denen sie erforderlich oder hilfreich ist (z.B. bei Stress oder Angst). Außerhalb dieser Situationen wird die Veränderung der affektiven Information auf ein Minimum beschränkt, sodass eine natürliche gegenseitige Wahrnehmung erzielt wird.

Bei Vorrichtungen, bei denen abhängig von der Augenposition des Benutzers bei der Verwendung der Vorrichtung von der Position der Augen abhängt, ist es vorteilhaft, wenn das vorliegende Verfahren vor dem Berechnen des Überlagerungsbereichs, ein Kalibrieren der Anzeige der Vorrichtung für einen Benutzer, wobei ein Augenabstand und eine Distanz zwischen den Augen und der Anzeige ermittelt werden, wobei der ermittelte Augenabstand und die ermittelte Distanz beim Berechnen eines Überlagerungsbereichs in der Anzeige berücksichtigt werden, vorsieht. Durch die Kalibrierung kann der Überlagerungsbereich genauer berechnet werden, sodass eine gezielte Überlagerung bestimmter, genau abgegrenzter Bereiche im Sichtfeld der Vorrichtung ermöglicht wird. Ohne eine Kalibrierung muss demgegenüber der Fehler einer Schätzung des Augenabstands und der Distanz zur Anzeige berücksichtigt werden, weshalb ein vergleichsweise größerer Überlagerungsbereich berechnet werden muss, um die gewünschte Überlagerung zuverlässig zu erzielen.

Weiters hat es sich als günstig herausgestellt, im Rahmen des gegenständlichen Verfahrens ein Auslösen einer optionalen Benutzerbenachrichtigung vorzusehen, wenn ein gekoppelter Biofeedback-Sensor, insbesondere ein gekoppelter Stresssensor, aktiviert wird (z.B. mittels Messung von Pulsfrequenz, Muskeltonus, EEG-Messung und/oder Hautleitgeschwindigkeit), d.h. wenn ein Signal eines gekoppelten Biofeedback-Sensors eine vordefinierte Schwelle überschreitet, und/oder wenn die Gesichtserkennung (z.B. in Form einer Gesichtserkennungssoftware) eine affektive Auslenkung oder Resonanz oberhalb einer vordefinierten Schwelle an einem erkannten Gesicht (d.h. an der Person gegenüber) detektiert und/oder wenn eine Stimmerkennung eine Stimme einer Person erkennt, die als Stressor in einer Datenbank vorab gespeichert wurde. Eine solche Benutzerbenachrichtigung oder Notifikation kann mit einem haptischen Signal (z.B. Vibration), akustischen Signal (z.B. Alarm) oder optischen Signal (z.B. blinkende Anzeige) erzielt werden, welche von einem Impulsgeber abgegeben werden.

In entsprechender Weise kann die gegenständliche Vorrichtung vorzugsweise eine Benachrichtigungseinrichtung umfassen, welche zur Abgabe eines optischen, akustischen oder haptischen Signals eingerichtet ist, wobei die Verarbeitungseinheit mit der Benachrichtigungseinrichtung verbunden und eingerichtet ist, ein optisches, akustisches oder haptisches Signal auszulösen, wenn ein spezifisches affektives Muster und/oder eine einem spezifischen Affekt zugeordnete Person erkannt wird. Als spezifisches affektives Muster wird hier sowohl eine affektive Reaktion des Benutzers der Vorrichtung verstanden, welche z.B. mittels eines Biofeedback-Sensors festgestellt werden kann, als auch eine affektive Reaktion des Gegenübers, d.h. an dem zumindest einen erkannten Gesicht, welche beispielsweise im Rahmen der Gesichtserkennung anhand des Gesichtsausdrucks festgestellt werden kann. Eine einem spezifischen Affekt zugeordnete Person kann beispielsweise im Rahmen einer zusätzlichen Stimmerkennung in Verbindung mit einer Datenbank von vorab als Stressor gespeicherten Personen bzw. deren Stimmcharakteristika festgestellt werden.

Die Benachrichtigung ermöglicht einem Benutzer mit geringer affektiver Perzeptionsstärke, sich die von einem Gegenüber transportierte affektive Information bewusst zu machen bzw. bewusst wahrzunehmen und entsprechend zu reagieren. Bei Anwendung der Vorrichtung oder des Verfahrens über einen längeren Zeitraum wird die Aufmerksamkeit für affektive Information durch die Benachrichtigungen trainiert und so die natürliche Empathie-Fähigkeit des Benutzers gesteigert.

Vorzugsweise kann die Überlagerung in Abhängigkeit von der oben erwähnten Stimmerkennung aktiviert werden, wobei die Überlagerung nur dann aktiviert wird, wenn die Stimme einer in einer dafür vorgesehenen Datenbank (von Stressoren) hinterlegten Person erkannt wird.

In einer weiteren bevorzugten Ausführungsform kann die Überlagerung in Abhängigkeit von der Identifizierung eines erkannten Gesichts aktiviert werden, wobei die Überlagerung nur dann aktiviert wird, wenn das Gesicht einer in einer dafür vorgesehenen Datenbank (von Stressoren) hinterlegten Person erkannt und identifiziert wird.

Vorzugsweise kann im Rahmen der Erfindung vom Benutzer aus mindestens drei Betriebsmodi ausgewählt werden:

1) eine permanent aktivierte Überlagerung, d.h. jedes erkannten Gesichts;

2) eine personenspezifische Überlagerung, wobei die Überlagerung abhängig von einer Stimmerkennung und/oder Gesichtserkennung aktiviert wird;

3) Aktivierung der Überlagerung mittels Biofeedback-Sensor (bzw. Stresssensor), d.h. wobei die Überlagerung in Abhängigkeit vom Stress-Level des Benutzers aktiviert wird.

Die Erfindung wird nachfolgend anhand eines besonders bevorzugten Ausführungsbeispiels, auf das sie jedoch nicht beschränkt sein soll, und unter Bezugnahme auf die Zeichnungen noch weiter erläutert. Dabei zeigen im Einzelnen:

Fig. 1 schematisch einen Teil einer erfindungsgemäßen Vorrichtung in Form einer AR-Brille;

Fig. 2 schematisch ein Blockschaltbild der Funktionselemente einer erfindungsgemäßen Vorrichtung;

Fig. 3 schematisch eine Illustration der Berechnung eines Überlagerungsbereichs; und

Fig. 4 ein Anwendungsbeispiel des erfindungsgemäßen Verfahrens.

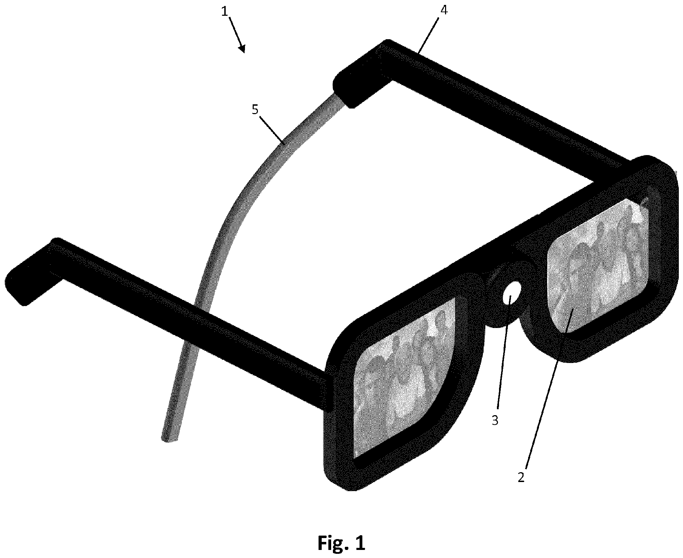

Fig. 1 zeigt eine vereinfachte Darstellung einer AR-Brille 1, wie beispielsweise den von Osterhout Design Group (ODG) angebotenen "R7 Smart Glasses". Die Brillengläser der AR-Brille 1 sind zwei Anzeigen 2, die jeweils als transparentes Display (Durchsicht-Display) ausgeführt sind. Die auf diesen Displays angezeigte graphische Oberfläche wird durch eine Verarbeitungseinheit (nicht gezeigt) erzeugt, welche mit dem Betriebssystem (OS) Android mit der OS-Erweiterung "ReticleOS" (ebenfalls von ODG) betrieben wird.

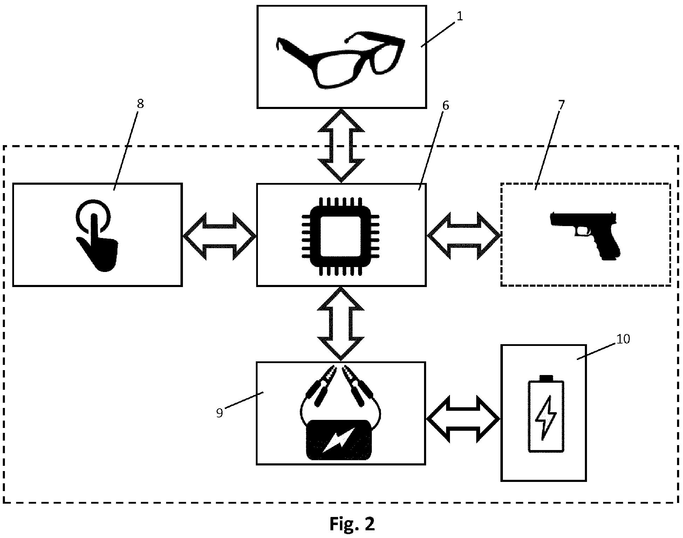

Eine in der AR-Brille 1 integrierte Kamera 3 umfasst einen Bildsensor und liefert ein Bild der Umgebung. Das Sichtfeld der Kamera 3 deckt im Wesentlichen den Halbraum vor den Brillengläsern ab und ist somit größer als das Sichtfeld der AR-Brille 1. Das Sichtfeld der AR-Brille 1 entspricht jenem Teil des Gesichtsfeld eines Benutzers, welcher durch die Brillengläser wahrgenommen wird. Das von der Kamera 3 erfasst Bild der Umgebung wird über eine Verkabelung im Brillengestell 4 und eine Verbindungsleitung 5 zu einer Verarbeitungseinheit 6 (siehe Fig. 2) übertragen und dort laufend von einer Gesichtserkennungssoftware analysiert, welche die Koordinaten des oder der Gesichter in der Umgebung ausgibt.

Ein auf der Verarbeitungseinheit 6 laufendes Anwendungsprogramm ermittelt zunächst aus dem zuvor kalibrierten Augenabstand die Entfernung des erkannten Gesichts. Dann berechnet sie laufend aus den Koordinaten und den im Rahmen der Kalibrierung festgelegten Parameter zur Physiognomie des Brillenträgers (Augenabstand, Distanz zwischen Brillengläser und Auge) für jedes Brillenglas die Koordinaten des Schnittpunktes der Blickachse zum Gesicht des Gegenübers mit den Brillengläsern, also jener Stelle in jedem Brillenglas, die geeignet ist, das Auge-Auge-Mund-Dreieck (AAM-Dreieck) des Gegenübers zu verdecken. Diese Daten werden wiederum an die API (Programmierschnittstelle) des ReticleOS übergeben, welches ein zuvor festgelegtes Bild oder Muster an der entsprechenden Stelle im Brillenglas einblendet.

Der Aufbau des Anwendungsprogramms erlaubt das Einbinden von Software-Erweiterungen. Dazu zählen beispielsweise Erweiterungen zur laufenden Veränderung des zur Überblendung verwendeten Musters oder Bildes. Das Anwendungsprogramm lässt sich somit z.B. dahingehend erweitern, dass als eingeblendetes Bild jenes Gesicht verwendet wird, das mit der Kamera aufgenommen, von der Gesichtserkennungssoftware erkannt und ausgegeben wurde und bei dem die Gesichtszüge gezielt manipuliert wurden.

Wie in Fig. 2 dargestellt, kann die Verarbeitungseinheit 6 optional mit Sensoren 7 und Eingabeelementen 8 verbunden sein. Die Sensoren 7 können einen Biofeedback-Sensor zur Messung von Stressparametern umfassen. Die gemessenen Parameter können dazu herangezogen werden, die Daten der Gesichtserkennungssoftware auszuwerten und einer Qualität zuzuordnen. Hierzu können z.B. Messungen des Hautwiderstandes, der Hauttemperatur, der Herzfrequenz oder der Bewegung des Körpers als Stressparameter herangezogen werden.

Die Verarbeitungseinheit 6 bildet zusammen mit der AR-Brille 1 eine erfindungsgemäße Vorrichtung. Diese ist außerdem mit einer Energieverwaltungseinheit 9 und einer wiederaufladbaren Batterie 10 verbunden.

Die Überlagerung des Gesichtsfelds mittels der AR-Brille 1 kann prinzipiell für zwei Arten der Beeinflussung verwendet werden: Erstens eine Reduktion des affektiven Informationsgehaltes durch eine generische Veränderung der Bilddaten (Helligkeit, Kontrast, Zeichnung, etc.) oder zweitens eine Überlagerung des Gesichtes mit einem anderem Gesicht bzw. einem Gesicht derselben Person mit einem modifizieren affektiven Informationsgehalt, insbesondere einen geringeren negativen emotionalen Inhalt als das Originalbild. Letzteres kann von der Kamera 3 davor aufgenommen zu werden.

Der Grad der akzeptablen Einflussnahme auf die Kommunikation ist durch die kommunikative Plausibilität begrenzt und wird, in Anlehnung an die psychiatrische Einteilung des psychopathologischen Status, als gegeben Adäquatheit definiert.

Bei Überschreiten dieses Wertes kommt es zu einem raschen Anstieg der vom beobachteten Gegenüber transportierten affektiven Information und infolge, durch deren Perzeption beim Benutzer/Brillenträger, zu einem starken Ausschlag der Stresssensoren bei diesem. Letzteres führt außerdem zu einem Umschalten der emotionalen Wahrnehmung von unwillkürlich zu willkürlicher Perzeption sowie zu einer Senkung der Adäquatheit.

Es ist ein Ziel der vorliegenden Erfindung, die Kommunikation unwillkürlich und langsam in Richtung positiver Expression und Perzeption der Emotionen bei den Gesprächspartnern zu steuern ohne den Schwellenwert der Adäquatheit zu erreichen oder zu überschreiten.

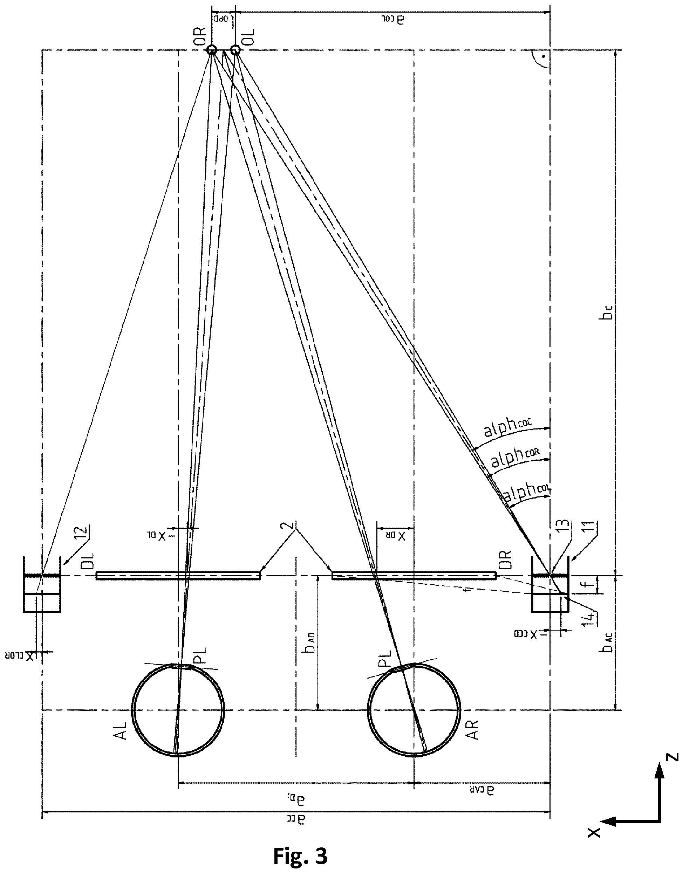

In Fig. 3 sind die Verfahrensschritte zur Berechnung des Überlagerungsbereichs anhand einer AR-Brille 1 gemäß Fig. 1 illustriert.

In der dargestellten beispielhaften Situation sind die Augen AL (linkes Auge) und AR (rechtes Auge) eines beobachtenden Subjekts (der Benutzer und Träger der AR-Brille 1) schematisch dargestellt. Die Augen AL, AR sind jeweils durch die Pupillenöffnung und den runden Augapfel mit der Netzhaut auf dessen hinterer Innenseite dargestellt. Die Koordinaten der Punkte AL und AR entsprechen denen des Mittelpunktes des jeweiligen Auges. Die Mittelpunkte der Pupillen sind mit PL und PR für die Pupille des linken bzw. rechten Auges eingezeichnet. Die Stecke $a_{PD}$ entspricht der gemessenen Pupillendistanz und steht für die Distanz zwischen den Mittelpunkten der beiden Augen AL, AR.

Das Subjekt trägt eine AR-Brille mit zwei Anzeigen 2 als Brillengläsern, die als transparente Displays realisiert sind. DL bezeichnet das aus Sicht des Subjekts linke Brillenglas bzw. Display und DR das rechte. Die Punkte DL und DR sind als Mittelpunkt der jeweiligen Anzeige 2 definiert. Auf der Brille sind zwei Kameras 11, 12 montiert, welche jeweils als Kamera Obscura dargestellt sind, bestehend aus einer Blende 13 und einem CCD-Bildsensor 14. Der Punkt C (für Camera) ist im Mittelpunkt der Blende definiert.

Die Koordinaten x und y beziehen sich auf das Koordinatensystem, dessen Ursprung im Mittelpunkt des Bildsensors 14 bzw. im linken oder rechten Display DL, DR liegt. Dabei sind x die horizontale und y die vertikale Koordinate. Die Indizes geben an, um welches Koordinatensystem es sich handelt. So beziehen sich die Koordinaten $x_{DL}$, $y_{DL}$ auf das Koordinaten-System mit dem Ursprungspunkt DL im Raum und die Koordinaten $x_{DR}$, $y_{DR}$ auf jenes mit dem Ursprungspunkt DR, also den Mittelpunkt der linken bzw. rechten Anzeige 2. Die Koordinaten $x_C$ und $y_C$ beziehen sich auf jenes Koordinatensystem, dessen Ursprung im Mittelpunkt des Bildsensors 14 liegt. Die Anzeigen 2 sowie der Bildsensor 14 der Kamera 11 sind parallel zur x-y-Ebene im Raum. Die normal dazu stehende z-Koordinate entspricht der Richtung der Kamera. Die Bildebene der Fig. 3 entspricht der x-z-Ebene im Raum.

Das Gegenüber, dessen Gesichtszüge gelesen werden, wird als Objekt (O) bezeichnet. Die Augen des dem Beobachter/Subjekt (S) zugewandten Gesichts des Objekts, werden aus Sicht des Subjekts mit OL für das linke Auge und OR für das rechte Auge bezeichnet. Der Mund wird als OM bezeichnet, dessen Gesichtsmittelpunkt als OC. Abstände in x-Richtung werden mit a bezeichnet, jene in Y-Richtung mit d und jene in Z-Richtung mit b. Diese Wahl orientierte sich an den üblichen Seitenbenennungen der im folgenden berechneten Dreiecke. Die Indizes dieser Längen bezeichnen die Endpunkte der dazugehörigen Strecken.

Die Zeichnung gemäß Fig. 3 stellt die Projektion der Stecken im Raum auf die x-z-Ebene dar. Es sei f der Abstand der Blende 13 zum Bildsensor 14, der durch die Kenntnis der verwendeten Kamera bekannt ist. Nun sei $b_C$ die noch unbekannte Entfernung der Kamera 11 zum Objekt (O). Die Abbildung am Bildsensor 14 ergibt die Entfernung der Abbildung des linken Auges OL des Objektes am Bildsensor 14 zur Zentral-Achse $x_{C,OL}$ sowie die Entfernung der Abbildung des rechten Auges OR des Objektes am Bildsensor 14 zur Zentral-Achse $x_{C,OR}$. Die Strahlendreiecke rechts von (vor) der Blende 13 zum Objekt sowie links von (hinter) der Blende 13 zum Bildsensor 14 sind ähnlich. Es gilt daher:

$$\frac{a_{C,OL}}{b_C} = \frac{x_{C,OL}}{f} = \tan\left(\alpha_{C,OL}\right) \qquad (1)$$

sowie

$$\frac{a_{C,OR}}{b_C} = \frac{x_{C,OL}}{f} = \tan\left(\alpha_{C,OL}\right) \qquad (2)$$

Nun wird der Augenabstand des Objekts $l_{O,PD}$ (oder kurz l) mit einem Durchschnitts-Wert von 65 mm angenommen und

$$a_{C,OL} = a_{C,OC} - \frac{l}{2} \quad \text{sowie} \quad a_{C,OR} = a_{C,OC} + \frac{l}{2}$$

Daraus ergibt sich ein Gleichungssystem aus zwei Gleichungen und zwei Unbekannten:

$$\frac{a_{C,OC} - \frac{l}{2}}{b_C} = \frac{x_{C,OL}}{f} \tag{3}$$

sowie

$$\frac{a_{C,OC} + \frac{l}{2}}{b_C} = \frac{x_{C,OR}}{f} \tag{4}$$

Aus diesen kann die Entfernung der Kamera zum Objekt $b_C$ sowie die Entfernung $a_{C,OC}$ des Gesichtsmittelpunktes OC des Objekts von der Zentralachse der Kamera 11 berechnet werden.
Das Zentrum der Abdunkelung des Displays ergibt sich nun aus:

$$\frac{a_{C,OC} - a_{C,AR}}{b_C + b_{AC}} = \frac{x_{DR}}{b_{AD}} = \tan\left(\alpha_{AR,OC}\right) \tag{5}$$

und analog für das linke Display:

$$\frac{a_{C,OC} - a_{C,AR} - a_{PD}}{b_C + b_{AC}} = \frac{x_{DL}}{b_{AD}} = \tan\left(\alpha_{AL,OC}\right) \tag{6}$$

Hierbei wurde noch angenommen, dass der Koordinatenursprung des Displays auf derselben Achse liegt, wie der Mittelpunkt des Auges. Ist dies nicht der Fall, sind die Koordinaten entsprechend zu verschieben. In der Praxis wird es umgekehrt sein: In der Kalibrierungsphase ist der Verdunkelungspunkt manuell verschiebbar. Der Augenmittelpunkt wird dann aus $x_{DR}$ errechnet bzw. die Koordinatentransformation iterativ aus allen manuellen Eingriffen angenähert.
Für die Transformation der y-Koordinate des Bildsensors 14 auf die y-Koordinate des Displays sei $d_{C,OA}$ die Projektion der Strecke vom Kamera-Blende zu den Augen OR, OL des Gegenübers/Objekts auf die y-z-Ebene und $d_{C,OM}$ die Projektion der Stecke von der Blende 13 zum Mund (OM) des Gegenübers/Objekts auf diese Ebene und $y_{C,OA}$ = $y_{C,OR}$ = $y_{C,OL}$ und $y_{C,OM}$ die y-Koordinaten der Abbildung dieser Punkte am Bildsensor 14 der Kamera 11:

$$\frac{d_{C,OA}}{b_C} = \frac{y_{C,OA}}{f} = \tan\left(\alpha_{C,OA}\right) \tag{7}$$

sowie

$$\frac{d_{C,OM}}{b_C} = \frac{y_{C,OM}}{f} = \tan\left(\alpha_{C,OM}\right) \tag{8}$$

Da $b_C$ bereits aus den Gleichungen (3) und (4) bekannt ist, kann aus diesem Gleichungssystem $d_{C,OM}$ und $d_{C,OA}$ berechnet werden. Analog zur Gleichung (5) lässt sich nun die y-Koordinate auf beiden Displays aus den (bei der Kalibrierung ermittelten) Abständen zwischen Kamera und Auge $d_{C,A}$ auf der Y-Z-Ebene berechnen:

$$\frac{d_{C,OA}-d_{C,A}}{b_C+b_{A,C}}=\frac{y_{D,A}}{b_{A,D}}=\tan\left(\alpha_{A,OA}\right) \qquad (9)$$

sowie

$$\frac{d_{C,OM}-d_{C,A}}{b_C+b_{A,C}}=\frac{y_{D,M}}{b_{A,D}}=\tan\left(\alpha_{A,OM}\right) \qquad (10)$$

Liegt der Ursprung der Koordinaten des Displays nicht wie hier angenommen auf der Höhe des Augen-Mittelpunktes, müssen die Koordinaten wieder entsprechend verschoben werden.

Bei der Transformation der y-Koordinaten wurden bereits die Eckpunkte $y_{D,A}$, $y_{D,M}$ des Überlagerungsbereichs und somit auch dessen Abmessungen bestimmt. Analog dazu kann dies bei der Transformation der x-Koordinaten geschehen, was jedoch aus Gründen der Übersichtlichkeit, weggelassen wurde. Hierbei kann genauso wie bei der Berechnung des Zentralpunktes des Überlagerungsbereichs vom Augen-Mittelpunkt ausgegangen werden, da das Dreieck (in der x-z-Ebene) vom Augen-Mittelpunkt zu OL und OR das Dreieck von der Pupille zu OL komplett überlagert.

Bei der Berechnung der Ausdehnung des Überlagerungsbereichs kann darüber hinaus noch jener Fehler berücksichtigt werden, der sich aus den unterschiedlichen Größen des Augenabstands $l_{O,PD}$ des Gegenübers/Objekts ergibt, d.h. der Fehler des angenommenen Durchschnittswerts von 65 mm. Eine Fehlerrechnung ergibt dann die notwendige Vergrößerung der Ausdehnung des Überlagerungsbereichs.

Bei einer Verwendung der zweiten Kamera 12 liefern zwei Winkel den erfassten Bezugspunkt beim Objekt. Da die Entfernung $a_{CC}$ zwischen den beiden Kameras bekannt ist, lässt sich das Dreieck zwischen der ersten Kamera 11, der zweiten Kamera 12 und dem Objekt bzw. dessen Augen OR, OL mithilfe des WSW-Satzes konstruieren, bzw. mithilfe des Sinus-Satzes berechnen. Der Abstand $b_C$ der Kameras 11, 12 zum Objekt entspricht dann der Höhe des Dreiecks. Man ist somit nicht mehr auf die Schätzung des Augenabstands des Objekts angewiesen und kann auf die oben erwähnte Fehlerrechnung und die daraus resultierende Vergrößerung des Überlagerungsbereichs verzichten.

Beispielsweise lässt sich mithilfe der Gleichung:

$$\frac{a_{CC}-a_{COC}-\dfrac{l}{2}}{b_C}=\frac{x_{CLOR}}{f} \qquad (11)$$

das System aus den Gleichungen (3) und (4) auch ohne die Kenntnis des Augenabstandes $l_{O,PD}$ lösen.

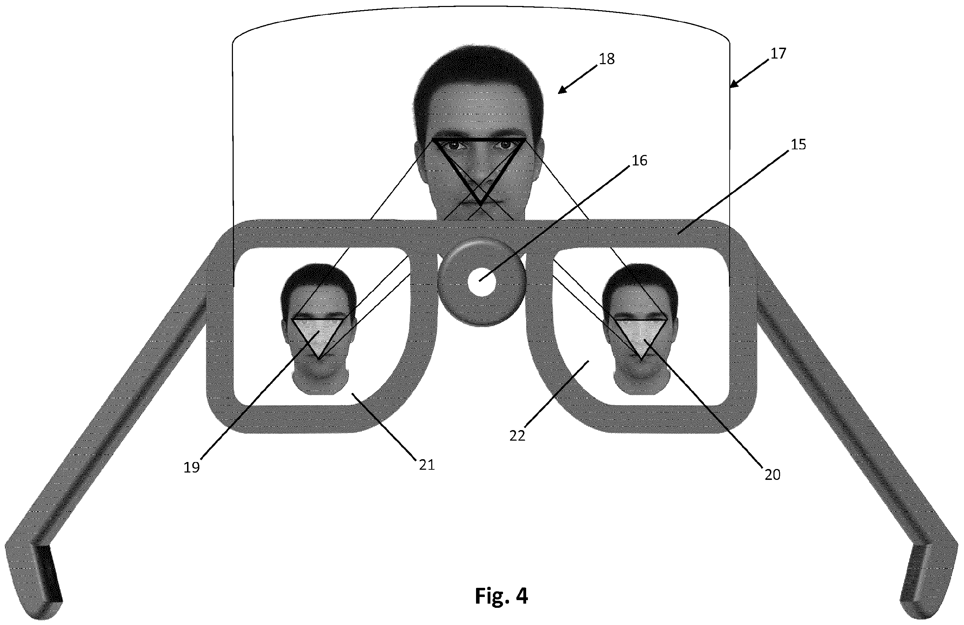

In Fig. 4 ist ein Anwendungsbeispiel des erfindungsgemäßen Verfahrens anhand einer beispielhaften AR-Brille 15 schematisch dargestellt. Eine Blickfeldkamera 16 an der Vorderseite der AR-Brille 15 erfasst ein Bild des Sichtfelds 17 der AR-Brille 15 mit einem integrierten Bildsensor. Eine integrierte Verarbeitungseinheit führt eine Gesichtserkennung mit dem erfassten Bild zur Erkennung zumindest eines Gesichts 18 durch. Dabei wird die Position von Augen und Mund des erkannten Gesichts 18 ermittelt und anschließend werden Überlagerungsbereiche 19, 20 in den Anzeigen 21, 22 der AR-Brille 15 in Abhängigkeit von den ermittelten Positionen von Augen und Mund berechnet (vgl. Fig. 3 und diesbezügliche Beschreibung oben). Schließlich wird das Gesichtsfelds eines Benutzers der Vorrichtung in den berechneten Überlagerungsbereichen 19, 20 der Anzeigen 21, 22 mit alternativen Bilddaten überlagert. Die alternativen Bilddaten sind jeweils teilweise transparente schwarze Flächen, welche somit eine lokale Abdunkelung des Gesichtsfelds in den Überlagerungsbereichen 19, 20 erzielen und dadurch die wahrnehmbare affektive Information des Gesichts 18 reduzieren. Außerhalb der Überlagerungsbereiche 19, 20 sind die Anzeigen 21, 22 gleichmäßig, vorzugsweise vollständig, transparent vergleichbar eine gewöhnlichen optischen Brille oder Sonnenbrille. Das Gesicht 18 ist auf den Anzeigen 21, 22 nur zum besseren Verständnis der Anordnung der Überlagerungsbereiche 19, 20 eingezeichnet und soll stellt die Perspektive des Benutzers der AR-Brille 15, d.h. welcher durch die Anzeigen 21, 22 hindurch blickt, dar.

**Patentansprüche**

1. Verfahren zur Veränderung der affektiven visuellen Information im Gesichtsfeld eines Benutzers einer Vorrichtung mit zumindest einem Bildsensor (14) und zumindest einer Anzeige (2), umfassend die Schritte:

Erfassen eines Bilds eines Sichtfelds der Vorrichtung mit dem Bildsensor (14),
Durchführen einer Gesichtserkennung mit dem erfassten Bild zur Erkennung zumindest eines Gesichts,
Ermitteln der Positionen von Augen und Mund des erkannten Gesichts,
Berechnen eines Überlagerungsbereichs in der Anzeige (2) der Vorrichtung in Abhängigkeit von den ermittelten Positionen von Augen und Mund,
Überlagern des Gesichtsfelds eines Benutzers der Vorrichtung in dem berechneten Überlagerungsbereich der Anzeige (2) mit alternativen Bilddaten.

2. Verfahren nach Anspruch 1, **dadurch gekennzeichnet, dass** das Überlagern des Gesichtsfelds ein Darstellen der alternativen Bilddaten im Überlagerungsbereich der Anzeige (2) umfasst.

3. Verfahren nach Anspruch 1 oder 2, **dadurch gekennzeichnet, dass** der Überlagerungsbereich im Wesentlichen einem zwischen den Positionen der beiden Augen und des Munds aufgespannten Dreieck entspricht.

4. Verfahren nach Anspruch 1 oder 2, **dadurch gekennzeichnet, dass** der Überlagerungsbereich im Wesentlichen das gesamte Blickfeld außerhalb eines zwischen den Positionen der beiden Augen und des Munds aufgespannten Dreiecks umfasst.

5. Verfahren nach einem der Ansprüche 1 bis 4, **dadurch gekennzeichnet, dass** die alternativen Bilddaten einer veränderten Abbildung des Sichtfelds der Vorrichtung im Überlagerungsbereich entsprechen, wobei die Veränderung der Abbildung eine Veränderung der Helligkeit, eine Verringerung einer Bildauflösung, eine Veränderung der Zeichnung und/oder des Kontrastes, eine farbliche Markierung und/oder eine Manipulation der Gesichtszüge umfasst.

6. Verfahren nach einem der Ansprüche 1 bis 5, **gekennzeichnet durch** ein Erfassen des Signals zumindest eines Biofeedback-Sensors, wobei die Überlagerung in Abhängigkeit von dem Signal des Biofeedback-Sensors aktiviert wird.

7. Verfahren nach Anspruch 5 und 6, **dadurch gekennzeichnet, dass** ein Ausmaß der Veränderung der Abbildung in Abhängigkeit von dem Signal des Biofeedback-Sensors ermittelt wird.

8. Verfahren nach einem der Ansprüche 1 bis 6, **gekennzeichnet durch**, vor dem Berechnen des Überlagerungsbereichs, Kalibrieren der Anzeige (2) der Vorrichtung für einen Benutzer, wobei ein Augenabstand und eine Distanz zwischen den Augen und der Anzeige (2) ermittelt werden, wobei der ermittelte Augenabstand und die ermittelte Distanz beim Berechnen eines Überlagerungsbereichs in der Anzeige (2) berücksichtigt werden.

9. Verfahren nach einem der Ansprüche 1 bis 6, **gekennzeichnet durch** Auslösen einer Benutzerbenachrichtigung, wenn ein Signal eines gekoppelten Biofeedback-Sensors eine vordefinierte Schwelle überschreitet und/oder wenn die Gesichtserkennung eine affektive Auslenkung oder Resonanz oberhalb einer vordefinierten Schwelle an einem erkannten Gesicht detektiert und/oder wenn eine Stimmerkennung eine Stimme einer Person erkennt, die als Stressor in einer Datenbank vorab gespeichert wurde.

10. Vorrichtung zur Veränderung der affektiven visuellen Information im Gesichtsfeld eines Benutzers, wobei die Vorrichtung zumindest einen Bildsensor (14) und zumindest eine Anzeige (2) sowie eine Verarbeitungseinheit (6) aufweist, die mit dem Bildsensor (14) und der Anzeige (2) verbunden ist, wobei der Bildsensor (14) zur Erfassung eines Bilds eines Sichtfelds der Vorrichtung eingerichtet ist, wobei die Anzeige (2) zum Überlagern des Gesichtsfelds eines Benutzers in einem Überlagerungsbereich der Anzeige (2) mit alternativen Bilddaten eingerichtet ist, **dadurch gekennzeichnet, dass** die Verarbeitungseinheit (6) eingerichtet ist, eine Gesichtserkennung mit einem vom Bildsensor (14) erfassten Bild durchzuführen, Positionen von Augen und Mund eines bei der Gesichtserkennung erkannten Gesichts zu ermitteln und einen Überlagerungsbereich in der Anzeige (2) für das Überlagern des Gesichtsfelds in Abhängigkeit von den ermittelten Positionen von Augen und Mund zu berechnen.

11. Vorrichtung nach Anspruch 10, **dadurch gekennzeichnet, dass** die Anzeige (2) ein Bildschirm oder ein Display, insbesondere ein transparentes Display, ist.

12. Vorrichtung nach Anspruch 11, **dadurch gekennzeichnet, dass** sie eine Augmented Reality Brille (1) ist.

13. Vorrichtung nach einem der Ansprüche 10 bis 12, **dadurch gekennzeichnet, dass** die Verarbeitungseinheit (6) eine Gesichtserkennungssoftware aufweist.

14. Vorrichtung nach einem der Ansprüche 10 bis 13, **dadurch gekennzeichnet, dass** sie einen Biofeedback-Sensor umfasst, wobei die Verarbeitungseinheit (6) mit dem Biofeedback-Sensor verbunden und eingerichtet ist, die Überlagerung in Abhängigkeit von einem Signal des Biofeedback-Sensors zu aktivieren.

15. Vorrichtung nach einem der Ansprüche 10 bis 14, **dadurch gekennzeichnet, dass** sie eine Benachrichtigungseinrichtung umfasst, welche zur Abgabe eines optischen, akustischen oder haptischen Signals eingerichtet ist, wobei die Verarbeitungseinheit (6) mit der Benachrichtigungseinrichtung verbunden und eingerichtet ist, ein optisches, akustisches oder haptisches Signal auszulösen, wenn ein spezifisches affektives Muster und/oder eine einem spezifischen Affekt zugeordnete Person erkannt wird.

**Fig. 1**

Fig. 2

**Fig. 3**

**Fig. 4**

EP 3 349 178 A1

Europäisches Patentamt

European Patent Office

Office européen des brevets

# EUROPÄISCHER RECHERCHENBERICHT

Nummer der Anmeldung

EP 17 15 1715

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MADHURA DATTA ET AL: "Two dimensional synthetic face generation and verification using set estimation technique", COMPUTER VISION AND IMAGE UNDERSTANDING, ACADEMIC PRESS, US, Bd. 116, Nr. 9, 16. Mai 2012 (2012-05-16), Seiten 1022-1031, XP028400035, ISSN: 1077-3142, DOI: 10.1016/J.CVIU.2012.05.004 [gefunden am 2012-06-06] * Zusammenfassung; Abbildungen 4,5; Tabelle 2 * * Absatz [0001] * ----- | 1-15 | INV. G06T11/00 |
| X | VLADO KITANOVSKI ET AL: "Augmented reality mirror for virtual facial alterations", IMAGE PROCESSING (ICIP), 2011 18TH IEEE INTERNATIONAL CONFERENCE ON, IEEE, 11. September 2011 (2011-09-11), Seiten 1093-1096, XP032079768, DOI: 10.1109/ICIP.2011.6115616 ISBN: 978-1-4577-1304-0 * Zusammenfassung; Abbildungen 1-4 * * Absätze [0001] - [0003] * ----- | 1-15 | |
| X | STEFANO MELACCI ET AL: "A template-based approach to automatic face enhancement", PATTERN ANALYSIS AND APPLICATIONS, SPRINGER-VERLAG, LO, Bd. 13, Nr. 3, 8. April 2009 (2009-04-08), Seiten 289-300, XP019806522, ISSN: 1433-755X * Zusammenfassung; Abbildung 4 * * Absätze [0001], [0002], [03.2] * ----- -/-- | 1-15 | |

RECHERCHIERTE SACHGEBIETE (IPC)

G06T

Der vorliegende Recherchenbericht wurde für alle Patentansprüche erstellt

| Recherchenort | Abschlußdatum der Recherche | Prüfer |
|---|---|---|
| München | 10. Oktober 2017 | Casteller, Maurizio |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 17 15 1715

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 124 186 A1 (SONY CORP [JP]) 25. November 2009 (2009-11-25) * Zusammenfassung; Abbildung 1 * * Absätze [0007], [0010], [0013], [0036], [0072], [0113] - [0120] * ----- | 1-15 | |
| X | MORISHIMA SHIGEO ET AL: "Instant Movie Casting with Personality: Dive into the Movie System", NETWORK AND PARALLEL COMPUTING; [LECTURE NOTES IN COMPUTER SCIENCE; LECT.NOTES COMPUTER], SPRINGER INTERNATIONAL PUBLISHING, CHAM, Bd. 6774 Chap.21, Nr. 558, 9. Juli 2011 (2011-07-09), Seiten 187-196, XP047370104, ISSN: 0302-9743 ISBN: 978-3-642-16019-6 | 1-4,10 | |
| A | * das ganze Dokument * ----- | 5-9, 11-15 | |
| X | US 2016/217621 A1 (RAGHOEBARDAJAL SHARWIN WINESH [GB] ET AL) 28. Juli 2016 (2016-07-28) | 1,10 | RECHERCHIERTE SACHGEBIETE (IPC) |
| A | * Zusammenfassung; Ansprüche 1-5; Abbildungen 1,10,13,14 * * Absätze [0037], [0077] * ----- | 2-9, 11-15 | |
| A | WO 2010/022351 A2 (UNIV VIRGINIA [US]; BOKER STEVEN M [US]; BRICK TIMOTHY R [US]; SPIES J) 25. Februar 2010 (2010-02-25) * Zusammenfassung * * Seite 2, Zeilen 16-26 * * Seite 23, Zeilen 27-33 * * Seite 28, Zeilen 11-25 * ----- | 1-15 | |

Der vorliegende Recherchenbericht wurde für alle Patentansprüche erstellt

| Recherchenort | Abschlußdatum der Recherche | Prüfer |
|---|---|---|
| München | 10. Oktober 2017 | Casteller, Maurizio |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 15 1715

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-10-2017

| Im Recherchenbericht angeführtes Patentdokument | Datum der Veröffentlichung | Mitglied(er) der Patentfamilie | Datum der Veröffentlichung |
|---|---|---|---|
| EP 2124186 A1 | 25-11-2009 | BR PI0807679 A2 | 27-05-2014 |
| | | CN 101617339 A | 30-12-2009 |
| | | EP 2124186 A1 | 25-11-2009 |
| | | JP 4853320 B2 | 11-01-2012 |
| | | JP 2008198062 A | 28-08-2008 |
| | | KR 20090113289 A | 29-10-2009 |
| | | US 2010066840 A1 | 18-03-2010 |
| | | WO 2008099627 A1 | 21-08-2008 |
| US 2016217621 A1 | 28-07-2016 | GB 2534580 A | 03-08-2016 |
| | | US 2016217621 A1 | 28-07-2016 |
| WO 2010022351 A2 | 25-02-2010 | US 2011292054 A1 | 01-12-2011 |
| | | WO 2010022351 A2 | 25-02-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110214082 A1
- US 9060095 B2